# EUROPÄISCHE PATENTSCHRIFT

(11) **EP 3 525 639 B1**
(45) Veröffentlichungstag und Bekanntmachung des Hinweises auf die Patenterteilung: **02.12.2020**
(21) Anmeldenummer: 17797855.8
(22) Anmeldetag: 16.10.2017
(51) Int. Cl.: A47J 41/00

(54) **TRAGBARE HANDVORRICHTUNG ZUM AUFNEHMEN UND TRANSPORTIEREN EINER SPEISE ODER EINES GETRÄNKS UND VERFAHREN ZUM TEMPERIEREN**
PORTABLE HAND-HELD DEVICE FOR ACCOMMODATING AND TRANSPORTING FOOD OR A BEVERAGE, AND METHOD FOR CONTROLLING TEMPERATURE
DISPOSITIF PORTATIF À MAIN DESTINÉ À RECEVOIR ET À TRANSPORTER UN ALIMENT OU UNE BOISSON ET PROCÉDÉ DE CONDITIONNEMENT THERMIQUE

(30) Priorität: 17.10.2016 DE 102016012323
(43) Veröffentlichungstag der Anmeldung: 21.08.2019
(73) Patentinhaber: Pelzer, Frank, 17268 Templin (DE)
(72) Erfinder: AMREIN, Matthias, Calgary T3H-1H5 (CA); REINDERS, Moritz, Calgary T3H-1H5 (CA); PELZER, Frank, Calgary T3H-1H5 (DE)
(74) Vertreter: Bittner, Thomas L.
(86) Internationale Anmeldenummer: PCT/DE2017/100878
(87) Internationale Veröffentlichungsnummer: WO 2018/072787

(56) Entgegenhaltungen:
- CN-U- 203 539 086
- CN-Y- 2 691 425
- US-A1- 2006 219 724

## Beschreibung

Die Erfindung betrifft eine tragbare Handvorrichtung zum Aufnehmen und Transportieren einer Speise oder eines Getränks sowie ein Verfahren zum Temperieren.

### Hintergrund

Derartige Handvorrichtungen werden genutzt, um Speisen oder Getränke aufzunehmen und diese zu transportieren. Die Handvorrichtung weist einen Thermobehälter sowie einen Behälterverschluss auf, der geeignet ist, eine Behälteröffnung des Thermobehälters zu verschließen. Zu solchen tragbaren Handvorrichtungen gehören beispielsweise Thermosflaschen und Thermoskannen oder mit einem Thermobehälter ausgestattete Kochutensilien.

Aus dem Dokument US 2006 / 0219724 A1 ist eine Kochutensil bekannt, welches einen Thermobehälter aufweist, bei dem in einem Isolierraum, der zwischen einer inneren und einer äußeren Wandung als abgedichteter und evakuierter Raum gebildet ist, ein Arbeitsmedium angeordnet ist. Das Arbeitsmedium befindet sich am Boden der äußeren Wandung in dem Isolierraum. Wird von außen Wärme zugeführt, geht das Arbeitsmedium in den gasförmigen Zustand über, so dass Gaspartikel in dem Isolierraum aufsteigen, bis in den seitlichen Bereich des Isolierraums zwischen der inneren und der äußeren Wandung. Die Gaspartikel ermöglichen eine Wärmeübertragung zwischen der äußeren und der inneren Wandung. Wird die thermische Energiezufuhr wieder abgeschaltet, kondensieren die Gaspartikel.

Ein weiteres Kochutensil mit einem inneren und einem äußeren Topf und einem hierzwischen ausgebildeten Raum ist im Dokument WO 96 / 16526 A1 offenbart. Bei Wärmezufuhr von außen werden in dem Raum zwischen dem inneren und dem äußeren Topf Wärmebrücken ausgebildet, die eine Wärmeübertragung zum inneren Topf hin ermöglichen. Das Ausbilden der Wärmebrücken erfolgt irreversibel.

Das Dokument CN 2 691 425 Y betrifft einen Topf mit Vakuum zum Erhitzen und Speichern von Wärme. Der Topf umfasst einen doppelschichtigen Metalltopfkörper mit einem darin eingepumpten Vakuum, einer Topfabdeckung und einem Wärmeträgerblock, der in der Doppelschicht am Boden des Vakuumtopfkörpers angeordnet ist. Der Wärmeträgerblock weist einen hohen Wärmeausdehnungskoeffizienten auf.

Das Dokument US 2006 / 219 724 A1 offenbart eine Thermoskanne, die so modifiziert wurde, dass ihr Inhalt im Inneren der Thermoskanne erwärmt werden kann und lange Zeit heiß bleibt, nachdem die externe Wärmequelle entfernt wurde. Eine Arbeitssubstanz mit einer flüssigen Phase und einer Dampfphase ist in dem Vakuumraum an der Bodenwand des Außenbehälters angeordnet. Die Menge der Arbeitssubstanz ist geringer als zum Füllen des Zwischenraums zwischen den Bodenwänden der Gefäße erforderlich wäre. Der gesättigte Dampfdruck des Arbeitsstoffs beträgt weniger als 10 Pa, wenn die äußere Wärmequelle entfernt oder ausgeschaltet wird. Wenn die Thermoskanne erhitzt wird, absorbiert die Arbeitssubstanz Wärme von der Bodenwand des Außenbehälters, verdampft und gibt die latente Verdampfungswärme an andere Teile der Thermoskanne ab.

Das Dokument CN 203 539 086 U betrifft einen energiesparenden Heizbehälter mit einer Öffnung. Die Außenwand des Behälters und eine Schale werden kombiniert, um einen geschlossenen Hohlraum zu bilden. In den Hohlraum wird ein Arbeitsmedium eingefüllt, um eine Vorrichtung mit gleichmäßiger Temperatur des Wärmerohrs zu bilden. Der Heizbehälter kann Wärme durch eine Verdampfungsseitenwandfläche eines Wärmerohrs absorbieren und kann die Wärme an eine Substanz übertragen, die durch eine Kondensationsseitenwandfläche des Wärmerohrs erwärmt werden muss.

### Zusammenfassung

Aufgabe der Erfindung ist es, eine tragbare Handvorrichtung zum Aufnehmen und Transportieren einer Speise oder eines Getränks sowie ein Verfahren zum Temperieren anzugeben, mit denen bei der tragbaren Handvorrichtung auf effiziente Art und Weise ein Erhitzen der Speise oder des Getränks in einem Thermobehälter sowie das thermische Isolieren der Speise oder des Getränks ermöglicht sind.

Die Aufgabe wird gelöst durch eine tragbare Handvorrichtung zum Aufnehmen und Transportieren einer Speise oder eines Getränks nach dem unabhängigen Anspruch 1 sowie ein Verfahren zum Temperieren einer Speise oder eines Getränks in einer tragbaren Handvorrichtung nach dem unabhängigen Anspruch 14 . Alternative Ausgestaltungen sind Gegenstand von abhängigen Unteransprüchen.

Nach einem Aspekt ist eine tragbare Handvorrichtung zum Aufnehmen und zum Transportieren einer Speise oder eines Getränks geschaffen, die einen Thermobehälter und einen Behälterverschluss aufweist, der eingerichtet ist, eine Behälteröffnung des Thermobehälters zu verschließen. Der Thermobehälter ist eingerichtet, eine Speise oder ein Getränk in einem Aufnahmeraum aufzunehmen. Der Thermobehälter weist den Aufnahmeraum umgebend eine innere und eine äußere Wandung sowie einen hierzwischen angeordneten Isolierraum auf, der geschlossen und abgedichtet ausgebildet und evakuiert ist. In dem Isolierraum ist ein Arbeitsmedium angeordnet ist, welches mittels Zufuhr thermischer Energie von außen über die äußere Wandung reversibel zwischen einem thermisch isolierenden Ausgangszustand, in welchem das Arbeitsmedium im festen Zustand ist und mit der äußeren Wandung in Berührungskontakt ist, und berührungskontaktfrei zur inneren Wandung angeordnet ist, und einem thermisch leitenden Zustand überführbar, in welchem zumindest ein Teil des Arbeitsmediums im flüssigen Zustand und expandiert ist und in wärmeleitendem Berührungskontakt sowohl mit der äußeren Wandung wie auch der inneren Wandung ist.

Nach einem weiteren Aspekt ist ein Verfahren zum Temperieren einer Speise oder eines Getränks in einer tragbaren Handvorrichtung geschaffen. Bei dem Verfahren wird ein zu temperierendes Gut, bei dem es sich um eine Speise oder ein Getränk handelt, in einem Aufnahmeraum eines Thermobehälters bereitgestellt. Der Thermobehälter weist den Aufnahmeraum umgebend eine innere und eine äußere Wandung sowie einen hierzwischen angeordneten Isolierraum auf, der geschlossen und abgedichtet ausgebildet und evakuiert ist. Es ist ein Behälterverschluss vorgesehen, der eingerichtet ist, eine Behälteröffnung des Thermobehälters zu verschließen. Bei dem Verfahren wird mittels einer Heizeinrichtung thermische Energie bereitgestellt. Die thermische Energie wird auf die äußere Wandung des Thermobehälters übertragen. Das zu temperierenden Gut wird mittels der thermischen Energie erhitzt, wobei hierbei ein Arbeitsmedium, welches in dem Isolierraum angeordnet ist, mittels der thermischen Energie erhitzt wird. Hierdurch wird das Arbeitsmedium reversibel aus einem thermisch isolierenden Ausgangszustand in einen thermisch leitenden Zustand überführt. Im thermisch isolierenden Ausgangszustand ist das Arbeitsmedium im festen Zustand und mit der äußeren Wandung in Berührungskontakt, und berührungskontaktfrei zur inneren Wandung angeordnet. Im thermisch leitenden Zustand ist zumindest ein Teil des Arbeitsmediums im flüssigen Zustand und expandiert und im wärmeleitendem Berührungskontakt sowohl mit der äußeren Wandung wie auch der inneren Wandung, wodurch die thermische Energie mittels Wärmeleitung von der äußeren Wandung über das flüssige Arbeitsmedium zur inneren Wandung und von da auf das zu temperierende Gut übertragen wird.

Es kann vorgesehen sein, dass das Arbeitsmedium mittels Zufuhr der thermischen Energie von außen über die äußere Wandung reversibel zwischen einem thermisch isolierenden Ausgangszustand, in weichem das Arbeitsmedium im festen Zustand ist und mit der äußeren Wandung in Berührungskontakt ist, zumindest im Bereich eines Bodens der äußeren Wandung, und berührungskontaktfrei zur inneren Wandung angeordnet ist, und einem thermisch leitenden Zustand überführbar ist, in welchem zumindest ein Teil des Arbeitsmediums im flüssigen Zustand und expandiert ist und in wärmeleitendem Berührungskontakt sowohl mit dem Boden der äußeren Wandung wie auch der inneren Wandung ist, zumindest im Bereich eines Bodens der inneren Wandung.

Der Behälterverschluss kann als thermisch isolierender Verschluss ausgebildet sein, um so die thermisch isolierende Wirkung des Thermobehälters auch im Verschlussbereich zu unterstützen. Der Behälterverschluss kann an dem Thermobehälter schraubbar oder schwenkbar angeordnet sein. Ergänzend oder alternativ kann ein Reibschluss vorgesehen sein, wenn der Behälterverschluss in der Behälteröffnung angeordnet ist, um den Thermobehälter zu verschließen. Es kann sich um einen abnehmbaren Deckel handeln.

Die äußere Wandung des Thermobehälters kann die Außenwand der tragbaren Handvorrichtung bilden.

Im thermisch leitenden Zustand erfolgt die Wärmeübertragung von zugeführter thermischer Energie von der äußeren Wandung über das flüssige Arbeitsmedium zur inneren Wandung und von dort auf die Speise oder das Getränk, die / das so erhitzt werden kann. Die Expansion und der Übergang in den flüssigen Zustand für das Arbeitsmedium sind reversibel, so dass beim Beenden des Zuführens thermischer Energie das Arbeitsmedium wieder zurück in den festen Zustand übergeht und hierbei auch der wärmeleitenden Berührungskontakt mit der inneren Wandung wieder unterbrochen wird. Das Arbeitsmedium geht in den thermisch isolierenden Ausgangszustand zurück. Der erhitzte Zustand der Speise oder des Getränks wird nun thermisch isoliert mittels des Thermobehälters.

Das Arbeitsmedium kann ein Material aus der folgenden Gruppe sein: Paraffin und Paraffinderivat. Das Arbeitsmedium kann zusätzlich einen oder mehrere Füllstoffe enthalten, der die Wärmeleitung des Arbeitsmediums im flüssigen Zustand unterstützen, zum Beispiel Titanspäne. Ein Füller kann auch die Ausdehnung des Trägermaterial unterstützen, zum Beispiel "Hollow Glass Spheres" wie sie beispielweise von der Firma Hollowlite verfügbar sind. Des Weiteren kann ein Füllstoff vorgesehen sein, um bei Umgebungstemperatur den Dampfdruck des Arbeitsmediums zu minder oder gering zu halten.

Der mittels Zufuhr thermischer Energie herstellbare thermisch leitende Zustand des Arbeitsmediums ist ausgebildet, wenn das Arbeitsmedium wenigstens teilweise im flüssigen Zustand ist und das Arbeitsmedium sowohl mit der inneren Wandung wie auch mit der äußeren Wandung in Berührungskontakt ist.

Der Thermobehälter kann auf der äußeren Wandung eine Beschichtung aus einem thermisch isolierenden Material aufweisen, zum Beispiel aus einem Plastikmaterial wie Silikon.

In dem thermisch leitenden Zustand kann das Arbeitsmedium mit dem Boden der inneren Wandung und hieran angrenzenden Seitenwandabschnitten der inneren Wandung sowie mit dem Boden der äußeren Wandung und hieran angrenzenden Seitenwandabschnitten der äußeren Wandung in Berührungskontakt sein. Im Bereich der Seitenwandabschnitte der inneren und / oder der äußeren Wandung kann der Berührungskontakt des flüssigen Arbeitsmediums auf die unmittelbar im Eckbereich an den Boden angrenzenden Seitenwandabschnitte begrenzt sein.

In dem thermisch leitenden Zustand kann der Berührungskontakt des Arbeitsmediums begrenzt sein auf den Boden der inneren Wandung und den Boden der äußeren Wandung. Der Berührungskontakt ist so limitiert auf den Kontakt zwischen den beiden Böden.

In dem thermisch leitenden Zustand kann der Berührungskontakt des Arbeitsmediums den Boden der inneren Wandung und / oder den Boden der äußeren Wandung vollständig erfassend ausgebildet sein. Alternativ kann der Berührungskontakt des Arbeitsmediums im thermisch leitenden Zustand nur einen Teilbereich des Bodens der inneren Wandung und / oder nur einen Teilbereich des Bodens der äußeren Wandung erfassen.

In dem thermisch leitenden Zustand kann der Isolierraum im Wesentlichen frei von Arbeitsmedium im gasförmigen Zustand sein. Sowohl im thermisch leitenden flüssigen Zustand wie auch im thermisch nicht leitenden festen Zustand kann der Isolierraum im Wesentlichen frei von Arbeitsmedium im gasförmigen Zustand sein. Auf diese Weise kann eine Verunreinigung des evakuierten Isolierraums vermieden werden.

Die innere und die äußere Wandung können aus einem Material aus der folgenden Gruppe bestehen: Metall, Glas und Kunststoff. Zum Einsatz kommen können wärmebeständige Materialien, die beständig sind gegenüber dem Zuführen thermischer Energie auf die äußere Wandung. Das Zuführen der thermischen Energie kann bis hin zum Kochen der Speise oder des Getränks in dem Aufnahmeraum führen. Die Wandung des Thermobehälters kann aus einem oder mehreren Materialien bestehen, die miteinander verträglich sind, insbesondere eine Materialverbindung ermöglichen, die das abgedichtete und evakuierte Ausbilden des Isolierraums zulässt.

Die äußere Wandung am Boden weist zumindest abschnittsweise ein Wandungsmaterial mit einem höheren Wärmeübertragungskoeffizienten als ein anderes Wandungsmaterial, welches von dem Wandungsmaterial verschieden ist, im Bereich außerhalb des Bodens der äußeren Wandung auf. Eine solche Ausgestaltung kann alternativ oder ergänzend für die innere Wandung vorgesehen sein. Die unterschiedlichen Wärmeübertragungskoeffizienten können mittels Verwendung unterschiedlicher Materialien ausgebildet sein. Alternativ oder ergänzend kann innen oder außen an dem entsprechenden Wandungsabschnitt eine Beschichtung vorgesehen sein, die dem Ausbilden eines unterschiedlichen Wärmeübertragungsverhaltens dient. Beispielsweise kann vorgesehen sein, dass die äußere Wandung im Boden effizienter Wärme aufnimmt und überträgt, also in einem Bereich, in welchem das Arbeitsmedium zumindest in dem thermisch isolierenden Zustand angeordnet ist. Wärme- und / oder feuerbeständige Materialien können zum Einsatz kommen.

Der Boden der äußeren Wandung und / oder der Boden der inneren Wandung können oberflächenvergrößernde Wandstrukturen aufweisen. Die oberflächenvergrößernden Wandstrukturen können ein oder mehreren Bodenvertiefungen und / oder ein oder mehrere Wandvorsprünge aufweisen. Die Wandstrukturen können eine regelmäßige Anordnung entsprechend ausgebildet sein. Beispielsweise kann der Boden der äußeren Wandung sich von der Mitte radial nach außen erstreckende Vertiefungen aufweisen, die umlaufend mit gleichen oder unterschiedlichen Abständen voneinander angeordnet sind.

In dem thermisch isolierenden Zustand kann zumindest ein Teil des Arbeitsmediums in den oberflächenvergrößernden Wandstrukturen aufgenommen sein. Zumindest ein Teil des Arbeitsmediums kann im thermisch isolierenden Zustand in Vertiefungen der oberflächenvergrößernden Wandstrukturen angeordnet sein. Handelt es sich bei dem Thermobehälter um einen aufrecht stehenden Behälter, kann sich das flüssige Arbeitsmedium nach dem Beenden der thermischen Energiezufuhr von außen aufgrund der Gravitationskraft automatisch wieder in den Vertiefungen sammeln und dort wieder in den festen Zustand übergehen, wobei die Vertiefungen eingerichtet sein können, eine Gleichverteilung des sich am Boden sammelnden Arbeitsmediums bereitzustellen. In einer Ausführungsform kann das Prinzip "verbundener Gefäße" zur Anwendung kommen.

An dem Thermobehälter kann eine Heizeinrichtung angeordnet sein, die eingerichtet ist, über die äußere Wandung dem Arbeitsmedium thermische Energie zuzuführen, um das Arbeitsmedium aus dem thermisch isolierenden Zustand in den thermisch leitenden Zustand zu überführen und die Speise oder das Getränk in dem Aufnahmeraum zu erhitzen. Die Heizeinrichtung kann eingerichtet sein, thermische Energie bis hin zum Kochen der Speise oder des Getränks in dem Aufnahmeraum bereitzustellen. Beispielsweise können eine elektrische Heizeinrichtung oder eine gasverbrennende Heizeinrichtung vorgesehen sein. Auch eine Feststoffbrenneinrichtung kann vorgesehen sein, zum Beispiel zum Verbrennen einer Feststoff-Brennkapsel. Die Heizeinrichtung kann lösbar an dem Thermobehälter angeordnet sein. Die Heizeinrichtung kann an dem Thermobehälter aufgenommen sein, derart dass eine einzelne tragbare Handvorrichtung gebildet ist. Beispielsweise können Thermobehälter und Heizeinrichtung eine tragbare Thermosflasche oder -kanne bilden.

Die Heizeinrichtung kann an dem Thermobehälter formschlüssig angeordnet sein. Beim formschlüssigen Anordnen der Heizeinrichtung an dem Thermobehälter kann vorgesehen sein, dass die oberflächenvergrößernden Wandstrukturen formschlüssig in zugeordnete Oberflächenstrukturen an der Heizeinrichtung eingreifen. Der Formschluss kann teilweise oder vollständig ausgebildet sein.

Die Heizeinrichtung kann an dem Thermobehälter im Bereich des Bodens der äußeren Wandung angeordnet sein. Die Heizeinrichtung kann an dem Thermobehälter angeschraubt sein und / oder mittels eines Klickverschlusses befestigt sein. Alternativ oder ergänzend kann eine Steckverbindung vorgesehen sein.

Es kann eine Steuereinrichtung vorgesehen sein, die eingerichtet ist, die Heizeinrichtung im Betrieb zu steuern. Das Steuern der Heizeinrichtung erfolgt insbesondere, wenn diese die zuzuführende thermische Energie erzeugt. Das Steuern kann ein Steuern der Abgabe der thermischen Energie umfassen. Auch ein Ein- und / oder ein Ausschaltzeitpunkt können mittels der Steuereinrichtung für die Heizeinrichtung gesteuert werden, beispielsweise mittels eines Triggerimpulses. Es kann sich um eine programmierbare Steuereinrichtung handeln. Die Steuereinrichtung kann an einen Transceiver koppeln, der zumindest das Empfangen von Steuersignalen für eine Fernbedienung ermöglicht. Beispielsweise kann eine solche Fernbedienung mithilfe einer Software-Applikation ausgeführt werden, die auf einem mobilen Computer oder einem Mobiltelefon installiert ist. Es kann vorgesehen sein, dass von der Steuereinrichtung während des Betriebs einmal oder mehrfach Steuerinformationen abgesendet werden, die über einen aktuellen Betriebs- oder Steuerzustand informieren. In Kombination mit einer solchen Fernbedienung oder auch ohne diese kann vorgesehen sein, dass die Steuereinrichtung programmierbar ist, um einen Heizvorgang zu konfigurieren. Hierzu können mittels der Steuereinrichtung Benutzereingaben erfasst werden.

Es kann eine Sensoreinrichtung vorgesehen sein, welche an die Steuereinrichtung funktionell koppelt, und die Steuereinrichtung eingerichtet ist, die Heizeinrichtung in Abhängigkeit von Sensorsignalen der Sensoreinrichtung zu steuern. Die Sensoreinrichtung kann eingerichtet sein, Betriebsparameter für den Aufnahmeraum des Thermobehälters zu erfassen, beispielsweise Druck und / oder Temperatur. Die Sensoreinrichtung kann im und / oder am Aufnahmeraum angeordnet sein, derart, dass die gewünschten Betriebsparameter gemessen werden können. Die so erfassten Sensorsignale können an die Steuereinrichtung übertragen werden, sei es kabelgebunden oder kabellos, um diese dort zu verarbeiten, so dass der Betrieb der Heizeinrichtung steuerbar ist. Es kann ein Kippsensor vorgesehen sein, der eingerichtet ist, einen Betrieb der Heizeinrichtung lageabhängig zuzulassen oder zu blockieren. Beispielweise kann so ein Betrieb der Heizeinrichtung unterbunden sein, wenn dieser anzeigt, dass der Thermobehälter auf der Seite liegt, wohingegen der Kippsensor das Einschalten der Heizeinrichtung zulässt, wenn der Thermobehälter aufrecht steht.

Im isolierraum kann ein Getter angeordnet sein. Hierbei handelt es sich um ein chemisch reaktives Material, das dazu dient, ein Vakuum möglichst lange zu erhalten.

An dem Thermobehälter kann außenseitig, zum Beispiel auf einem Außenmantel, eine Griffeinrichtung angeordnet sein, die einen Griffabschnitt aufweisen, der als thermischer Isoliergriff ausgeführt ist.

Mit der tragbaren Handvorrichtung kann ein Dampfkochtopf bereitgestellt sein.

Im Sinne der vorliegenden Beschreibung ist der Boden, mit dem das Arbeitsmedium in den verschiedenen Zuständen in Berührungskontakt ist oder kommt, der Teil der Wandung der Behälter, auf welchen die Heizeinrichtung die thermische Energie gibt. Diese muss in einer Ausgestaltung nicht notwendigerweise mit einer am Thermobehälter gebildeten Standfläche zusammenfallen, kann jedoch.

In Verbindung mit dem Verfahren zum Temperieren einer Speise oder eines Getränks in einer tragbaren Handvorrichtung gelten die vorangehenden Erläuterungen zur tragbaren Handvorrichtung entsprechend. Bei dem Verfahren kann vorgesehen sein, dass nach dem Erhitzen des zu temperierenden Guts die Zufuhr der thermischen Energie beendet wird, worauf das flüssige Arbeitsmedium zurück in den festen Zustand geht. Hierbei wird der im thermisch leitenden Zustand ausgebildete Berührungskontakt des flüssigen Arbeitsmediums mit der inneren Wandung wieder unterbrochen, so dass der thermisch isolierende Zustand wieder hergestellt wird.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Querschnittsdarstellung einer tragbaren Handvorrichtung mit einem Thermobehälter, wobei ein Arbeitsmedium in einem thermisch isolierenden Ausgangszustand ist;
- Fig. 2: eine schematische Querschnittsdarstellung der tragbaren Handvorrichtung aus Fig. 1, wobei das Arbeitsmedium flüssig und in einem expandierten, thermisch leitenden Zustand ist;
- Fig. 3: eine schematische Querschnittsdarstellung der tragbaren Handvorrichtung aus Fig. 1, wobei das Arbeitsmedium nun wieder in dem thermisch isolierenden Ausgangszustand ist;
- Fig. 4: eine perspektivische schematische Darstellung eines Thermobehälters;
- Fig. 5: eine weitere perspektivische Teildarstellung des Thermobehälters aus Fig. 3 und
- Fig. 6: eine perspektivische Darstellung des Bodenabschnitts des Thermobehälters.

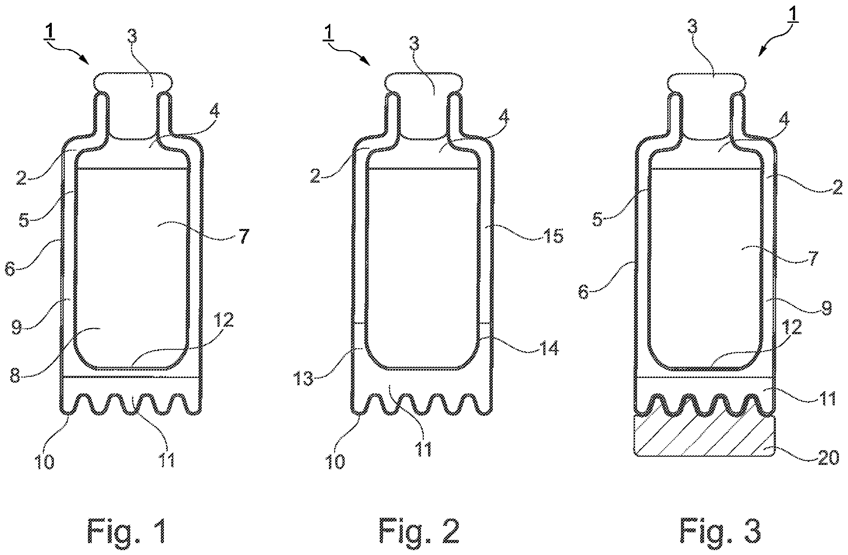

Fig. 1 bis 3 zeigen schematische Querschnittsdarstellungen einer tragbaren Handvorrichtung 1 mit einem Thermobehälter 2 und einem Behälterverschluss 3, der eine Behälteröffnung 4 des Thermobehälters 2 verschließt. Mit der tragbaren Handvorrichtung 1 kann beispielsweise eine Thermosflasche oder ein Kochutensil bereitgestellt sein.

Bei dem Thermobehälter 2 umgeben eine innere und eine äußere Wandung 5, 6 einen Aufnahmeraum 7, in dem ein zu temperierendes flüssiges oder festes Gut 8 aufgenommen ist, beispielsweise eine Speise oder ein Getränk.

Die innere und die äußere Wandung 5, 6 umschließen einen Isolierraum 9, der evakuiert, abgeschlossen und abgedichtet ausgebildet ist. Mittels der Evakuierung ist ein Vakuum hergestellt, wie dieses für Thermobehälter oder Dewar-Gefäße als solches bekannt ist.

Gemäß Fig. 1 ist am Boden 10 der äußeren Wandung 6 ein Arbeitsmedium 11 in festem Zustand angeordnet, wobei das Arbeitsmedium 11 in der gezeigten Darstellung den Boden 10 der äußeren Wandung 6 vollständig bedeckend angeordnet ist. Das Arbeitsmedium 11 ist in dem in Fig. 1 gezeigten thermisch isolierenden Zustand mit dem Boden 10 der äußeren Wandung 6 in Berührungskontakt. Von einem Boden 12 der inneren Wandung 5 ist das Arbeitsmedium 11 jedoch beabstandet, also nicht im Berührungskontakt.

Um das zu temperierende Gut 8 in dem Aufnahmeraum 7 zu erhitzen, wird von außen auf die äußere Wandung 6 thermische Energie zugeführt, so dass sich das Arbeitsmedium 11 gemäß Fig. 2 verflüssigt und hinsichtlich seines Volumens expandiert, so dass ein Berührungskontakt nun auch zum Boden 12 der inneren Wandung 5 ausgebildet wird. Bei dem gezeigten Ausführungsbeispiel erstreckt sich der Berührungskontakt bis in den Bereich von Seitenwandabschnitten 13, 14, die an den Boden 12 der inneren Wandung 5 und den Boden 10 der äußeren Wandung 6 unmittelbar anschließen. Alternativ kann der Berührungskontakt auf den Bereich der Böden 10, 12 beschränkt sein, wobei diese teilweise oder vollständig vom Berührungskontakt erfasst sein können.

Im Bereich der Seitenwandabschnitte 13, 14 kann eine Trennwand (nicht dargestellt) vorgesehen sein, die im Isolierraum 2 einen unteren Teilraum, welcher das Arbeitsmedium aufnimmt, und einen oberen Teilraum trennt, welcher frei von dem Arbeitsmedium 11 ist. Beide Teilräume sind evakuiert; alternativ auch nur einer der Teilräume. Die Trennwand kann sich im Isolierraum 2 horizontal erstrecken zwischen der inneren Wandung 5 und der äußeren Wandung 6. Die Trennwand kann für das Arbeitsmedium 11 undurchlässig sein. Die Trennwand, deren Vorsehen nicht auf die in den Figuren gezeigten Ausführungsbeispiele beschränkt ist, kann mit einer Lippe ausgeführt sein.

Ein Bereich 15 oberhalb des verflüssigten Arbeitsmediums 11 bleibt frei von dem Arbeitsmedium 11. Über den Berührungskontakt, welcher für das Arbeitsmedium 11 zwischen der inneren und der äußeren Wandung 5, 6 hergestellt ist, kann nun die von außen über die äußere Wandung 6 zugeführte thermische Energie zur inneren Wandung 5 übertragen werden, und von dort dann auf das zu temperierende Gut 8, bis hin zum Kochen des zu temperierenden Guts 8.

Ist der Erwärmungsprozess beendet, endet die thermische Energiezufuhr. Hierauf geht das Arbeitsmedium 11 gemäß Fig. 3 wieder zurück in den thermisch isolierenden Ausgangszustand, in welchem das Arbeitsmedium 11 im festen Zustand und am Boden 10 der äußeren Wandung 6 angeordnet ist, ohne mit dem Boden 12 der inneren Wandung 5 in Kontakt zu stehen. In diesem Zustand kann dann der evakuierte Isolierraum 9 seine thermische Isolierwirkung wieder vollständig entfalten.

Als Arbeitsmedium 11 kommen beispielsweise die folgenden Materialien zum Einsatz: Paraffin oder Paraffinderivat.

In Fig. 3 ist schematisch eine Heizeinrichtung 20 gezeigt, die eingerichtet ist, thermische Energie zu erzeugen und diese bei dem gezeigten Ausführungsbeispiel an den Boden 10 der äußeren Wandung 6 abzugeben.

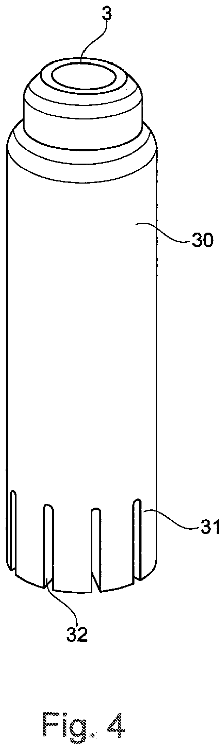

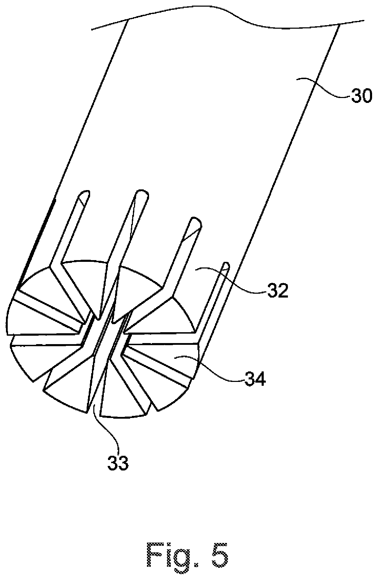

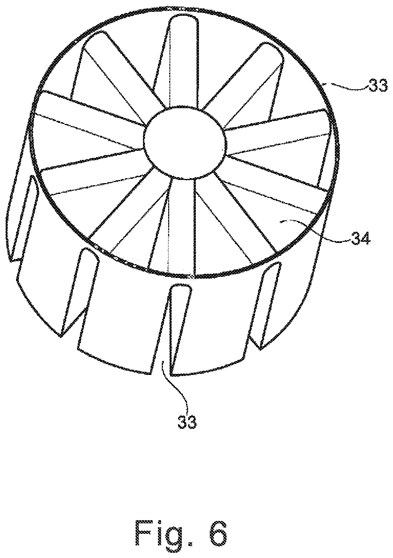

Die Fig. 4 bis 6 zeigen schematische Darstellungen einer Ausführungsform eines doppelwandigen Thermobehälters 30, der mit gleichen Eigenschaften wie der Thermobehälter 2 in den Fig. 1 bis 3 ausgebildet sein kann und der Bestandteil einer tragbaren Handvorrichtung sein kann. Der Thermobehälter 30 weist im Bodenbereich 31 oberflächenvergrößernde Wandstrukturen 32 auf (wie dies auch bei der Ausführung in den Fig. 1 bis 3 der Fall ist), die zwischen flügelartigen Ausnehmungen 33 (im Isolierraum 9) innere Vertiefungen 34 ausbilden. Wird der Thermobehälter 30 mit einer Heizeinrichtung (nicht dargestellt) kombiniert, kann vorgesehen sein, dass dieser formschlüssig in die Wandstrukturen eingreift.

## Patentansprüche

1. Tragbare Handvorrichtung (1) zum Aufnehmen und Transportieren einer Speise oder eines Getränks, mit
- einem Thermobehälter (2; 30), welcher eingerichtet ist, eine Speise oder ein Getränk in einem Aufnahmeraum (7) aufzunehmen, und welcher den Aufnahmeraum (7) umgebend eine innere und eine äußere Wandung (5, 6) sowie einen hierzwischen angeordneten Isolierraum (9) aufweist, der geschlossen und abgedichtet ausgebildet und evakuiert ist; und
- einem Behälterverschluss (3), der eingerichtet ist, eine Behälteröffnung des Thermobehälters (2; 30) zu verschließen;
wobei in dem Isolierraum (9) ein Arbeitsmedium (11) angeordnet ist, welches mittels Zufuhr thermischer Energie von außen über die äußere Wandung (6) reversibel überführbar ist zwischen
- einem thermisch isolierenden Ausgangszustand, in welchem das Arbeitsmedium (11) im festen Zustand ist und mit der äußeren Wandung (6) in Berührungskontakt ist, und berührungskontaktfrei zur inneren Wandung (5) angeordnet ist, und
- einem thermisch leitenden Zustand, in welchem zumindest ein Teil des Arbeitsmediums (11) im flüssigen Zustand und expandiert ist und in wärmeleitendem Berührungskontakt sowohl mit der äußeren Wandung (6) wie auch der inneren Wandung (5) ist, und **dadurch gekennzeichnet, dass** die äußere Wandung (6) am Boden (10; 31) zumindest abschnittsweise ein Wandungsmaterial mit einem höheren Wärmeübertragungskoeffizienten als ein anderes Wandungsmaterial im Bereich außerhalb des Bodens (10; 31) der äußeren Wandung (6) aufweist, welches von dem Wandungsmaterial verschieden ist.

2. Tragbare Handvorrichtung (1) nach Anspruch 1, **dadurch gekennzeichnet, dass** in dem thermisch leitenden Zustand das Arbeitsmedium (11) mit dem Boden (12) der inneren Wandung (5) und hieran angrenzenden Seitenwandabschnitten (14) der inneren Wandung (5) sowie mit dem Boden (10; 31) der äußeren Wandung (6) und hieran angrenzenden Seitenwandabschnitten (13) der äußeren Wandung (6) in Berührungskontakt ist.

3. Tragbare Handvorrichtung (1) nach Anspruch 1, **dadurch gekennzeichnet, dass** in dem thermisch leitenden Zustand der Berührungskontakt des Arbeitsmediums (11) begrenzt ist auf den Boden (12) der inneren Wandung (5) und den Boden (10; 31) der äußeren Wandung (6).

4. Tragbare Handvorrichtung (1) nach mindestens einem der vorangehenden Ansprüche, **dadurch gekennzeichnet, dass** in dem thermisch leitenden Zustand der Berührungskontakt des Arbeitsmediums (11) den Boden (12) der inneren Wandung (5) und / oder den Boden (12) der äußeren Wandung (6) vollständig erfassend ausgebildet ist.

5. Tragbare Handvorrichtung (1) nach mindestens einem der vorangehenden Ansprüche, **dadurch gekennzeichnet, dass** in dem thermisch leitenden Zustand der Isolierraum (9) im Wesentlichen frei von Arbeitsmedium (11) im gasförmigen Zustand ist.

6. Tragbare Handvorrichtung (1) nach mindestens einem der vorangehenden Ansprüche, **dadurch gekennzeichnet, dass** die innere und die äußere Wandung (5, 6) aus einem Material aus der folgenden Gruppe bestehen: Metall, Glas und Kunststoff.

7. Tragbare Handvorrichtung (1) nach mindestens einem der vorangehenden Ansprüche, **dadurch gekennzeichnet, dass** der Boden (10; 31) der äußeren Wandung (6) und / oder der Boden (12) der inneren Wandung (5) oberflächenvergrößernde Wandstrukturen (32) aufweist.

8. Tragbare Handvorrichtung (1) nach Anspruch 7, **dadurch gekennzeichnet, dass** in dem thermisch isolierenden Zustand zumindest ein Teil des Arbeitsmediums (11) in den oberflächenvergrößernde Wandstrukturen (32) aufgenommen ist.

9. Tragbare Handvorrichtung (1) nach mindestens einem der vorangehenden Ansprüche, **dadurch gekennzeichnet, dass** an dem Thermobehälter (2; 30) eine Heizeinrichtung angeordnet ist, die eingerichtet ist, über die äußere Wandung (6) dem Arbeitsmedium (11) thermische Energie zuzuführen, um das Arbeitsmedium (11) aus dem thermisch isolierenden Zustand in den thermisch leitenden Zustand zu überführen und die Speise oder das Getränk in dem Aufnahmeraum (7) zu erhitzen.

10. Tragbare Handvorrichtung (1) nach Anspruch 9, **dadurch gekennzeichnet, dass** die Heizeinrichtung an dem Thermobehälter (2; 30) formschlüssig angeordnet ist.

11. Tragbare Handvorrichtung (1) nach Anspruch 9 oder 10, **dadurch gekennzeichnet, dass** die Heizeinrichtung an dem Thermobehälter (2; 30) im Bereich des Bodens (10; 31) der äußeren Wandung (6) angeordnet ist.

12. Tragbare Handvorrichtung (1) nach mindestens einem der Ansprüche 9 bis 11, **dadurch gekennzeichnet, dass** eine Steuereinrichtung vorgesehen ist, die eingerichtet ist, die Heizeinrichtung im Betrieb zu steuern.

13. Tragbare Handvorrichtung (1) nach Anspruch 12, **dadurch gekennzeichnet, dass** eine Sensoreinrichtung vorgesehen ist, welche an die Steuereinrichtung funktionell koppelt, und die Steuereinrichtung eingerichtet ist, die Heizeinrichtung in Abhängigkeit von Sensorsignalen der Sensoreinrichtung zu steuern.

14. Verfahren zum Temperieren einer Speise oder eines Getränks in einer tragbaren Handvorrichtung (1), bei dem
- Bereitstellen eines zu temperierenden Guts (8), bei dem es sich um eine Speise oder ein Getränk handelt, in einem Aufnahmeraum (7) eines Thermobehälters (2; 30), wobei
- der Thermobehälter (2; 30) den Aufnahmeraum (7) umgebend eine innere und eine äußere Wandung (5, 6) sowie einen hierzwischen angeordneten Isolierraum (9) aufweist, der geschlossen und abgedichtet ausgebildet und evakuiert ist,
- ein Behälterverschluss (3) vorgesehen ist, der eingerichtet ist, eine Behälteröffnung des Thermobehälters (2; 30) zu verschließen, und
- die äußere Wandung (6) am Boden (10; 31) zumindest abschnittsweise ein Wandungsmaterial mit einem höheren Wärmeübertragungskoeffizienten als ein anderes Wandungsmaterial, welches von dem Wandungsmaterial verschieden ist, im Bereich außerhalb des Bodens (10; 31) der äußeren Wandung aufweist;
- Bereitstellen von thermischer Energie mittels einer Heizeinrichtung;
- Übertragen der thermischen Energie auf die äußere Wandung (6) des Thermobehälters (2; 30); und
- Erhitzen des zu temperierenden Guts (8) mittels der thermischen Energie, wobei hierbei
- ein Arbeitsmedium (11), welches in dem Isolierraum (9) angeordnet ist, mittels der thermischen Energie erhitzt wird und
- das Arbeitsmedium (11) hierdurch reversibel aus einem thermisch isolierenden Ausgangszustand, in welchem das Arbeitsmedium (11) im festen Zustand ist und mit der äußeren Wandung in Berührungskontakt ist, und berührungskontaktfrei zur inneren Wandung (5) angeordnet ist, in einen thermisch leitenden Zustand überführt wird, in welchem zumindest ein Teil des Arbeitsmediums (11) im flüssigen Zustand und expandiert ist und in wärmeleitendem Berührungskontakt sowohl mit der äußeren Wandung wie auch der inneren Wandung (5) ist, wodurch die thermische Energie mittels Wärmeleitung von der äußeren Wandung über das flüssige Arbeitsmedium (11) zur inneren Wandung (5) und von da auf das zu temperierende Gut (8) übertragen wird.

## Claims

1. Portable hand-held device (1) for receiving and transporting food or a beverage, comprising
- a thermal container (2; 30) which is configured to receive food or a beverage in a receiving space (7) and which has an inner and an outer wall (5, 6) surrounding the receiving space (7) as well as an insulating space (9) arranged between said walls, which insulating space is closed and sealed and evacuated; and
- a container closure (3) which is configured to close a container opening of the thermal container (2; 30);
a working medium (11) being arranged in the insulating space (9), which working medium, by supplying thermal energy from the outside via the outer wall (6), can be reversibly converted between
- a thermally insulating initial state, in which the working medium (11) is in the solid state and is in contact with the outer wall (6) and is arranged so as not to be in contact with the inner wall (5), and
- a thermally conductive state in which at least part of the working medium (11) is in the liquid state and is expanded and is in thermally conductive contact with both the outer wall (6) and the inner wall (5), and
**characterized in that** the outer wall (6) has a wall material at least in portions at the bottom (10; 31) that has a higher heat transfer coefficient than another wall material, which is different from said wall material, in the region outside the bottom (10; 31) of the outer wall (6).

2. Portable hand-held device (1) according to claim 1, **characterized in that**, in the thermally conductive state, the working medium (11) is in contact with the bottom (12) of the inner wall (5) and adjoining lateral wall portions (14) of the inner wall (5), and with the bottom (10; 31) of the outer wall (6) and adjoining lateral wall portions (13) of the outer wall (6).

3. Portable hand-held device (1) according to claim 1, **characterized in that**, in the thermally conductive state, the contact of the working medium (11) is limited to the bottom (12) of the inner wall (5) and the bottom (10; 31) of the outer wall (6).

4. Portable hand-held device (1) according to at least one of the preceding claims, **characterized in that**, in the thermally conductive state, the contact of the working medium (11) is formed to completely cover the bottom (12) of the inner wall (5) and/or the bottom (12) of the outer wall (6).

5. Portable hand-held device (1) according to at least one of the preceding claims, **characterized in that**, in the thermally conductive state, the insulating space (9) is substantially free of working medium (11) in a gaseous state.

6. Portable hand-held device (1) according to at least one of the preceding claims, **characterized in that** the inner and outer walls (5, 6) are made of a material from the following group: metal, glass and plastics material.

7. Portable hand-held device (1) according to at least one of the preceding claims, **characterized in that** the bottom (10; 31) of the outer wall (6) and/or the bottom (12) of the inner wall (5) has surface-enlarging wall structures (32).

8. Portable hand-held device (1) according to claim 7, **characterized in that**, in the thermally insulating state, at least part of the working medium (11) is received in the surface-enlarging wall structures (32).

9. Portable hand-held device (1) according to at least one of the preceding claims, **characterized in that** a heating means is arranged on the thermal container (2; 30), which heating means is configured to supply thermal energy to the working medium (11) via the outer wall (6), in order to convert the working medium (11) from the thermally insulating state to the thermally conductive state, and to heat the food or beverage in the receiving space (7).

10. Portable hand-held device (1) according to claim 9, **characterized in that** the heating means is arranged on the thermal container (2; 30) in a form-fitting manner.

11. Portable hand-held device (1) according to claim 9 or 10, **characterized in that** the heating means is arranged on the thermal container (2; 30) in the region of the bottom (10; 31) of the outer wall (6).

12. Portable hand-held device (1) according to at least one of claims 9 to 11, **characterized in that** a control means is provided which is configured to control the heating means during operation.

13. Portable hand-held device (1) according to claim 12, **characterized in that** a sensor means is provided which is functionally coupled to the control means, and the control means is configured to control the heating means depending on sensor signals from the sensor means.

14. Method for controlling the temperature of food or a beverage in a portable hand-held device (1), in which
- providing an item (8), which is food or a beverage, to be temperature-controlled in a receiving space (7) of a thermal container (2; 30), wherein
- the thermal container (2; 30) has an inner and an outer wall (5, 6) surrounding the receiving space (7) as well as and an insulating space (9) arranged between said walls, which insulating space is closed and sealed and evacuated,
- a container closure (3) is provided which is configured to close a container opening of the thermal container (2; 30), and
- the outer wall (6) has a wall material at least in portions at the bottom (10; 31) that has a higher heat transfer coefficient than another wall material, which is different from said wall material, in the region outside the bottom (10; 31) of the outer wall;
- providing thermal energy by means of a heating means;
- transferring the thermal energy to the outer wall (6) of the thermal container (2; 30); and
- heating the item (8) to be temperature-controlled by means of the thermal energy, wherein
- a working medium (11), which is arranged in the insulating space (9), is heated by means of the thermal energy and
- the working medium (11) is thereby reversibly converted from a thermally insulating initial state, in which the working medium (11) is in a solid state and is in contact with the outer wall and is arranged so as not to be in contact with the inner wall (5), into a thermally conductive state, in which at least some of the working medium (11) is in a liquid state and is expanded and in thermally conductive contact with both the outer wall and the inner wall (5), whereby the thermal energy is transferred from the outer wall to the inner wall (5) via the liquid working medium (11) by means of heat conduction, and is transferred from said inner wall to the item (8) to be temperature controlled.

## Revendications

1. Dispositif portatif à main (1) destiné à recevoir et à transporter un aliment ou une boisson, comportant
- un récipient thermique (2 ; 30), qui est conçu pour recevoir un aliment ou une boisson dans un espace de réception (7) et qui présente, autour de l'espace de réception (7), une paroi interne et une paroi externe (5, 6) ainsi qu'un espace isolant (9) disposé entre celles-ci, qui est réalisé de manière fermée et étanche et sous vide ; et
- une fermeture (3) de récipient qui est conçue pour fermer une ouverture du récipient thermique (2 ; 30) ;
dans lequel un médium de travail (11) est disposé dans l'espace isolant (9) et peut être transformé, par apport d'énergie thermique depuis l'extérieur par l'intermédiaire de la paroi externe (6), de manière réversible, entre
- un état de départ thermiquement isolant, dans lequel le médium de travail (11) est à l'état solide et est disposé en contact avec la paroi externe (6) et sans contact avec la paroi interne (5), et
- un état thermoconducteur, dans lequel au moins une partie du médium de travail (11) est à l'état liquide et dilatée et en contact thermoconducteur tant avec la paroi externe (6) qu'avec la paroi interne (5), et
**caractérisé en ce que** la paroi externe (6) présente sur le fond (10 ; 31), au moins dans certaines régions, un matériau de paroi comportant un coefficient de transfert thermique plus élevé que celui d'un autre matériau de paroi dans la zone se trouvant à l'extérieur du fond (10 ; 31) de la paroi externe (6), ce dernier matériau de paroi étant différent du matériau de paroi.

2. Dispositif portatif à main (1) selon la revendication 1, **caractérisé en ce que**, à l'état thermoconducteur, le médium de travail (11) est en contact avec le fond (12) de la paroi interne (5) et des sections de paroi latérale adjacentes (14) de la paroi interne (5) ainsi qu'avec le fond (10 ; 31) de la paroi externe (6) et des sections de paroi latérale adjacentes (13) de la paroi externe (6).

3. Dispositif portatif à main (1) selon la revendication 1, **caractérisé en ce que**, à l'état thermoconducteur, le contact du médium de travail (11) est limité au fond (12) de la paroi interne (5) et au fond (10 ; 31) de la paroi externe (6).

4. Dispositif portatif à main (1) selon au moins l'une des revendications précédentes, **caractérisé en ce que**, à l'état thermoconducteur, le contact du médium de travail (11) est formé pour venir en prise entièrement avec le fond (12) de la paroi interne (5) et/ou avec le fond (12) de la paroi externe (6).

5. Dispositif portatif à main (1) selon au moins l'une des revendications précédentes, **caractérisé en ce que**, à l'état thermoconducteur, l'espace isolant (9) est sensiblement exempt de médium de travail (11) à l'état gazeux.

6. Dispositif portatif à main (1) selon au moins l'une des revendications précédentes, **caractérisé en ce que** les parois interne et externe (5, 6) sont constituées d'un matériau choisi dans le groupe suivant : du métal, du verre et du plastique.

7. Dispositif portatif à main (1) selon au moins l'une des revendications précédentes, **caractérisé en ce que** le fond (10 ; 31) de la paroi externe (6) et/ou le fond (12) de la paroi interne (5) présente des structures de paroi (32) qui agrandissent la surface.

8. Dispositif portatif à main (1) selon la revendication 7, **caractérisé en ce que**, à l'état thermiquement isolant, au moins une partie du médium de travail (11) est reçue dans les structures de paroi (32) qui agrandissent la surface.

9. Dispositif portatif à main (1) selon au moins l'une des revendications précédentes, **caractérisé en ce que**, au niveau du récipient thermique (2 ; 30) est disposé un système de chauffage, lequel système de chauffage est conçu pour apporter de l'énergie thermique au médium de travail (11) par l'intermédiaire de la paroi externe (6) afin de transformer le médium de travail (11) depuis l'état thermiquement isolant à l'état thermoconducteur et de chauffer l'aliment ou la boisson dans l'espace de réception (7).

10. Dispositif portatif à main (1) selon la revendication 9, **caractérisé en ce que** le système de chauffage est disposé par complémentarité de forme au niveau du récipient thermique (2 ; 30).

11. Dispositif portatif à main (1) selon la revendication 9 ou 10, **caractérisé en ce que** le système de chauffage est disposé au niveau du récipient thermique (2 ; 30) dans la zone du fond (10 ; 31) de la paroi externe (6).

12. Dispositif portatif à main (1) selon au moins l'une des revendications 9 à 11, **caractérisé en ce qu'**un système de commande est prévu, lequel système de commande est conçu pour commander le système de chauffage lors du fonctionnement.

13. Dispositif portatif à main (1) selon la revendication 12, **caractérisé en ce qu'**un système capteur est prévu, lequel système capteur s'accouple fonctionnellement au système de commande, et **en ce que** le système de commande est conçu pour commander le système de chauffage en fonction des signaux de capteur du système capteur.

14. Procédé de conditionnement en température d'un aliment ou d'une boisson dans un dispositif portatif à main (1), dans lequel
- un produit (8) destiné à être conditionné en température, qui est un aliment ou une boisson, est mis à disposition dans un espace de réception (7) d'un récipient thermique (2 ; 30), dans lequel
- le récipient thermique (2 ; 30) présente, autour de l'espace de réception (7), une paroi interne et une paroi externe (5, 6) ainsi qu'un espace isolant (9) disposé entre celles-ci, qui est réalisé de manière fermée et étanche et sous vide,
- une fermeture (3) de récipient est prévue, laquelle fermeture de récipient est conçue pour fermer une ouverture du récipient thermique (2 ; 30), et
- la paroi externe (6) du fond (10 ; 31) présente, au moins dans certaines régions, un matériau de paroi présentant un coefficient de transfert thermique supérieur à celui d'un autre matériau de paroi, différent du matériau de paroi, dans la zone se trouvant à l'extérieur du fond (10 ; 31) de la paroi externe ;
- de l'énergie thermique est mise à disposition au moyen d'un système de chauffage ;
- l'énergie thermique est transférée vers la paroi externe (6) du récipient thermique (2 ; 30) ; et
- le produit (8) destiné à être conditionné en température est chauffé au moyen de l'énergie thermique, dans lequel
- un médium de travail (11), qui est disposé dans l'espace isolant (9), est chauffé au moyen de l'énergie thermique et
- le médium de travail (11) est ainsi transformé, de manière réversible, depuis un état de départ thermiquement isolant, dans lequel le médium de travail (11) est à l'état solide et est en contact avec la paroi externe, et est disposé sans contact avec la paroi interne (5), en un état thermoconducteur, dans lequel au moins une partie du médium de travail (11) est à l'état liquide et dilatée et en contact thermoconducteur tant avec la paroi externe qu'avec la paroi interne (5), permettant ainsi de transférer l'énergie thermique par conduction thermique de la paroi externe à la paroi interne (5), par l'intermédiaire du médium de travail (11) liquide, et de là au produit (8) destiné à être conditionné de manière thermique.
